**Europäisches Patentamt**

**European Patent Office**

**Office européen des brevets**

(19)

(11) Veröffentlichungsnummer: **0 152 611
B1**

# (12) EUROPÄISCHE PATENTSCHRIFT

(45) Veröffentlichungstag der Patentschrift:
**22.06.88**

(51) Int. Cl.⁴: **H 01 H 33/00,** H 02 B 13/02

(21) Anmeldenummer: **84116007.0**

(22) Anmeldetag: **20.12.84**

(54) **Metallgekapselte, gasisolierte Schaltanlage.**

(30) Priorität: **14.02.84 CH 700/84
30.03.84 CH 1629/84**

(43) Veröffentlichungstag der Anmeldung:
**28.08.85 Patentblatt 85/35**

(45) Bekanntmachung des Hinweises auf die Patenterteilung:
**22.06.88 Patentblatt 88/25**

(84) Benannte Vertragsstaaten:
**CH DE FR GB IT LI NL SE**

(56) Entgegenhaltungen:
**CH - A - 354 141
DE - A - 2 924 430
DE - A - 3 215 236**

(73) Patentinhaber: **BBC Brown Boveri AG, Haselstrasse,
CH-5401 Baden (CH)**

(72) Erfinder: **Munzinger, Karl, Talackerstrasse 12,
D-8156 Oberhasli (CH)**
Erfinder: **Pinnekamp, Friedrich, Dr., Obergasse 4,
CH-5301 Siggenthal-Station (CH)**

**Beschreibung**

Bei der Erfindung wird ausgegangen von einer metallgekapselten, gasisolierten Schaltanlage gemäss dem Oberbegriff von Patentanspruch 1.

Mit diesem Oberbegriff nimmt die Erfindung auf einen Stand der Technik Bezug, wie er in der DE-A-32 15 236 beschrieben ist. Bei der bekannten Schaltanlage sind Leistungs- und Trennschalter in einem gemeinsamen Schottraum enthalten und lassen sich bei Wartungsarbeiten abbauen, ohne dass die Sammelschiene fertiggeschaltet werden muss. Jedoch benötigt diese Schaltanlage eine verhältnismässig grosse Anzahl an Isolierteilen und beansprucht darüber hinaus verhältnismässig viel Platz, da zwischen dem die Schalter enthaltenden Schottraum und den geschotteten Sammelschinen ein Zwischenraum erforderlich ist, welcher derart bemessen sein muss, dass er die volle Isolierstrecke des Trennschalters aufnehmen kann.

Die Erfindung, wie sie in den Ansprüchen gekennzeichnet ist, löst die Aufgabe, eine Schaltanlage der gattungsgemässen Art derart auszubilden, dass diese sich bei grosser Wartungsfreundlichkeit ihrer am meisten beanspruchten Komponenten durch Einsparung von Teilen und durch einen geringen Platzbedarf auszeichnet.

Die Aufgabe wird in Verbindung mit den Merkmalen des Oberbegriffs gemäss dem kennzeichnenden Teil des Anspruchs 1 gelöst. Die erfindungsgemässe Schaltanlage zeichnet sich dadurch aus, dass die in dieser Anlage verwendeten Leistungsschalter leicht von aussen zugänglich sind. Daher lassen sich an den von allen Komponenten der Schaltanlage am meisten beanspruchten Leistungsschaltern in einfacher Weise Montage- und Revisionsarbeiten durchführen, ohne dass es erforderlich ist, die Sammelschiene abzuschalten. Durch Verwendung eines Teils des Gehäuses des Leistungsschalters als Durchführung durch die metallene Wand des Sammelschienengehäuses sind Schottungsisolatoren zwischen dem Inneren des Sammelschienengehäuses und dem im allgemeinen einen höheren Druck aufweisenden Inneren des Schalters entbehrlich und kann zugleich eine besonders platzsparende Anordnung erzielt werden.

Zur näheren Erläuterung wird nachfolgend ein Ausführungsbeispiel der Erfindung anhand der Zeichnung näher beschrieben.

Hierbei zeigt:

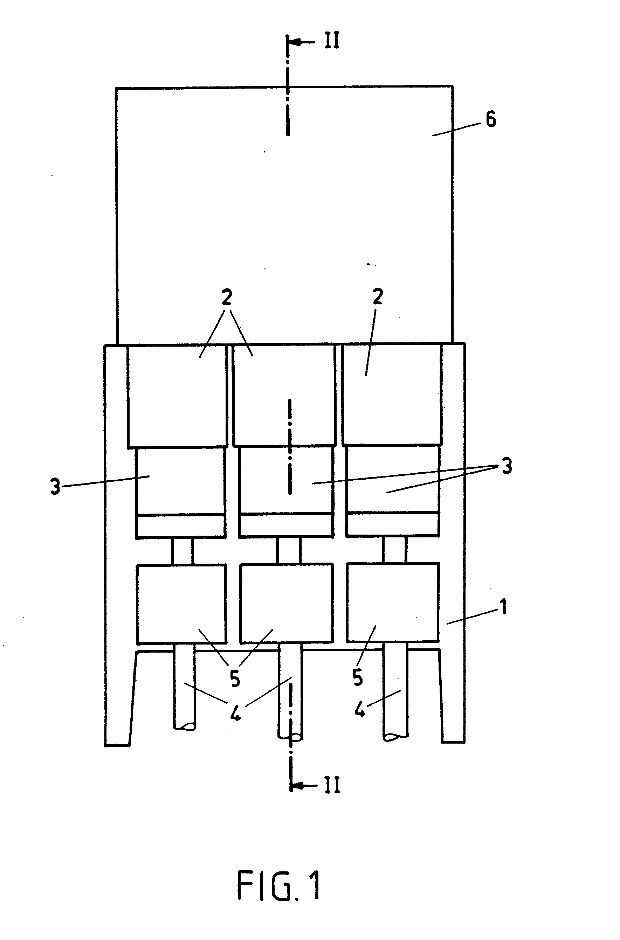

Fig. 1 eine Frontansicht einer erfindungsgemäss ausgeführten Schaltanlage,

Fig. 2 eine Ansicht der längs II–II geschnittenen Schaltanlage gemäss Fig. 1, und

Fig. 3 eine Ansicht einer geschnittenen weiteren Ausführungsform der erfindungsgemässen Schaltanlage.

In den Figuren sind gleiche Teile mit gleichen Bezugszeichen versehen. Mit 1 ist ein Gehäuse einer Schaltanlage bezeichnet, an welchem drei den Phasen R, S, T eines Drehstromsystems zugeordnete Leistungsschalter 2 angebracht sind. An die Schalter 2 sind mittels Kabelendverschlüssen 3 Kabel 4 angesteckt, die von bewickelten Ringkernen 5 induktiver Messwandler umgeben sind. Die Schalter 2 werden von einem Antrieb 6 betätigt.

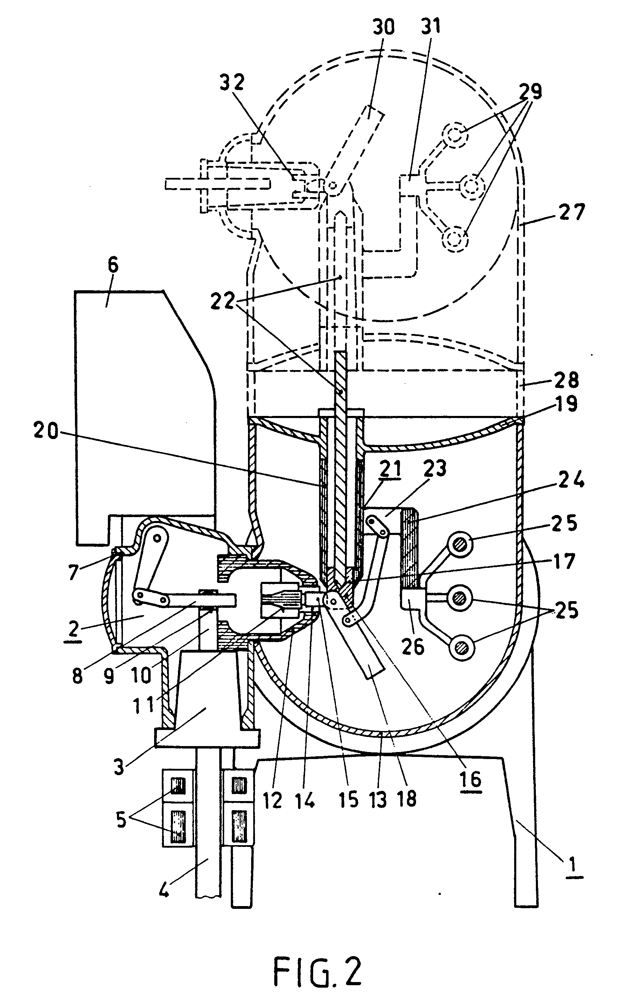

Der Antrieb 6 wirkt gemäss Fig. 2 über ein nicht bezeichnetes Hebelsystem auf einen in einem isoliergasgefüllten Gehäuse 7 befindlichen beweglichen Kontakt 8 des Leistungsschalters 2. Als Isoliergas des Leistungsschalters 2 ist vorzugsweise Schwefelhexafluorid von 5 bis 6 bar Druck vorgesehen. Es kann aber auch ein anderes Isoliergas, etwa ein Schwefelhexafluorid-Luftgemisch, verwendet werden. Denkbar ist es aber auch, dass der Leistungsschalter als Vakuumschalter ausgebildet ist.

Der Kontakt 8 steht über einen Gleitkontakt 9 mit dem stromführenden Leiter 10 des Kabels 4 in elektrisch leitender Verbindung und wirkt mit einem im Gehäuse 7 befindlichen feststehenden Kontakt 11 zusammen. Das den beweglichen und den feststehenden Kontakt umfassende Kontaktsystem des Leistungsschalters 2 ist von einer mit dem Inneren des Gehäuses 7 kommunizierenden Löschkammer umgeben. Die Löschkammerwand 12 besteht aus Isolierstoff und begrenzt das Innere des Gehäuses 7 des Leistungsschalters gegenüber dem Inneren eines gasdicht verschlossenen und mit Schwefelhexafluorid von ca. 1 bis 1,5 bar Druck gefüllten Sammelschienengehäuses 13.

Ein den feststehenden Kontakt 11 tragender Stromanschluss 14 ist in gasdichter Weise durch die Löschkammerwand 12 in das Innere des Sammelschienengehäuses 13 geführt und ist an seinem im Sammelschienengehäuse 13 befindlichen Ende als Hülse ausgebildet. In diese Hülse ist ein als Stecker 15 ausgebildetes Ende eines Kupplungsteiles 16 eingeführt. Das Kupplungsteil 16 trägt einen hohl ausgebildeten Kontakt 17 sowie einen drehbar gelagerten beweglichen Kontakt 18 eines nicht bezeichneten Trennschalters. Das Kupplungsteil 16 ist ein in gasdichter Weise an einem rohrförmig ausgebildeten und auf einem abnehmbaren Deckel 19 des Sammelschienengehäuses 13 befestigten Teil 20 eines Stützisolators 21 befestigt. Durch eine im Deckel 19 vorgesehene Öffnung und das hohle Innere des rohrförmigen Teils 20 des Stützisolators 21 kann ein erdbarer Stab 22 in den Kontakt 17 gesteckt werden.

Der Stützisolator 21 weist ferner ein über ein Verbindungsstück 23 am rohrförmigen Teil 20 befestigtes Isolierteil 24 auf, welches eine der Phasen einer dreiphasigen Sammelschiene 25 sowie den feststehenden Kontakt 26 des Trennschalters trägt. Der bewegliche Kontakt 18 des Trennschalters wird von einem auf dem Verbindungsstück 23 gelagerten, nicht bezeichneten Hebelsystem angetrieben.

Diese Schaltanlage lässt sich in einfacher Weise montieren. Trennschalter und Sammelschiene werden – am Stützisolator 21 befestigt – zusammen mit dem Deckel 19 in das Sammelschienengehäuse 13 eingebaut und danach der Leistungsschalter 2 seitlich in das Sammelschienengehäuse 13 eingeschoben und die Löschkammerwand 12 gasdicht an einem Flansch des Sammelschienengehäuses 13 verspannt. Hierbei werden der Stromanschluss 14 und der Stecker 15 in elektrisch leitender Weise miteinander kontaktiert. Der Trennerantrieb kann über eine nicht dargestellte, oberhalb der Schnittebene in das Sammelschienengehäuse 13 eingeführte Welle auf das am Verbindungsstück 23 gelagerte Hebelsystem einwirken. Die Welle kann bei geeigneter Abmessung des Trennschalterantriebes aber auch direkt auf den am Kupplungsteil 16 gelagerten beweglichen Kontakt 18 des Trennschalters einwirken.

Auch die Wartung dieser Anlage ist einfach, da der Leistungsschalter 2 als am stärksten beanspruchtes Teil der Anlage dem Montagepersonal von aussen zugänglich ist, ohne dass das Sammelschienengehäuse 13 geöffnet werden muss. Bei einer Revision des Leistungsschalters 2 ist es lediglich notwendig, Leistungs- und Trennschalter auszuschalten und das Kupplungsteil 16 durch Einführen des Stabes 22 zu erden. Die Erdung kann hierbei durch elektrisch leitende Verbindung des Stabes 22 mit dem Sammelschienengehäuse 13 erfolgen. Nach Ablassen des Isoliergases aus dem Schaltergehäuse 7 und anschliessendes Öffnen desselben, können sodann Revisionsarbeiten am Leistungsschalter 2 vorgenommen werden. Treten Fehler am Trennschalter oder an der Sammelschiene 25 auf, so können dieselben nach Ausschalten des Leistungsschalters 2 und Erden der Sammelschiene 25 über den Trennschalter und den Stab 22 behoben werden, ohne dass der Leistungsschalter 2 ausgebaut werden muss.

Durch die Ausbildung des Erdungsschalters als Steckerder ist es möglich, auf dem Sammelschienengehäuse 13 spiegelsymmetrisch ein zweites Sammelschienengehäuse 27 anzubringen. Wie in Fig. 2 gestichelt dargestellt ist, kann dieses Gehäuse 27 unter Verwendung eines rohrförmigen Zwischenteils 28 in gasdichter Weise auf das Gehäuse 13 aufgesetzt werden und entsprechend dem Sammelschienengehäuse 13 angeordnete und aufgebaute Komponenten, wie Sammelschienen 29 und Trennschalter mit Kontakten 30, 31 aufweisen. Anstelle eines Leistungsschalters kann am Sammelschienengehäuse 27 jedoch ein Erdungsschalter 32 vorgesehen sein. Bei dieser Anlage wirkt der Stab 22 als leitende Verbindung zwischen dem oberen und dem unteren System. Nach Öffnen des Leistungsschalters 2 und Schliessen des Erdungsschalters 32 lassen sich bei dieser Schaltanlage bei geschlossenem unteren und geöffnetem oberen Trennschalter Wartungsarbeiten im Sammelschienengehäuse 13 durchführen. Sammelschiene 29 ist dann weiterhin betriebsbereit. Entsprechend können Wartungsarbeiten im Sammelschienengehäuse 27 durchgeführt werden, wenn die Sammelschiene 25 freigeschaltet ist und die Sammelschiene 29 bei geöffnetem Leistungsschalter 2 über den oberen Trennschalter und den geschlossenen Erdungsschalter 32 auf Erdpotential gebracht ist.

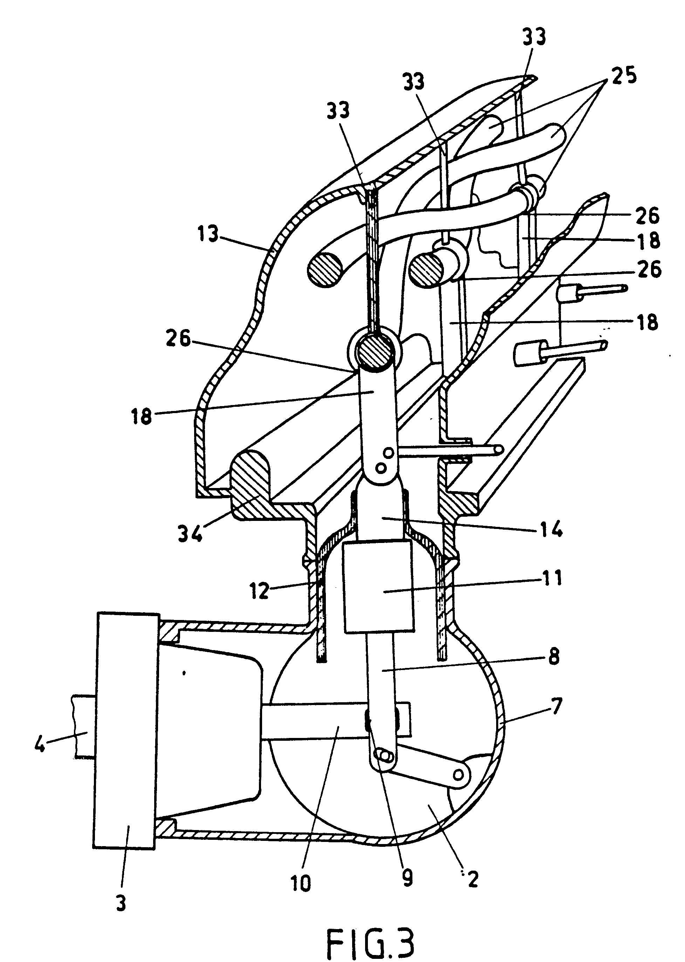

Bei der in Fig. 3 dargestellten weiteren Ausführungsform der erfindungsgemässen Schaltanlage weist die im Sammelschienengehäuse 13 von Stützisolatoren 33 gehaltene dreiphasige Sammelschiene 25 drei schraubenlinienförmig um eine nicht dargestellte gemeinsame Achse gewundene Phasenleiter auf. Durch die schraubenlinienförmige Verwindung wird erreicht, das die feststehenden Kontakte 26 der Trennschalter jeder der drei Phasen in axialer Richtung versetzt und jeweils in gleichen Abständen von den Stromanschlüssen 14 des zugehörigen Leistungsschalters 2 angeordnet werden können. Die feststehenden Kontakte 26 der Trennschalter können daher unmittelbar an den zugeordneten Phasenleitern der Sammelschiene 25 angebracht werden. Ferner können die Trennschalter alle gleich ausgebildet und an einander entsprechenden Stellen des Sammelschienengehäuses 13 angeordnet sein. Daher wird durch diese Ausgestaltung der erfindungsgemässen Anlage das Volumen des Sammelschienengehäuses 13 ganz erheblich verringert.

Die in Fig. 3 dargestellten Trennschalter weisen bewegliche Kontakte 18 auf, welche von der dargestellten Einschaltstellung über eine nicht dargestellte Ausschaltstellung in Eingriff mit einem Erdkontakt 34 (Erdstellung) gebracht werden können. Es ist auch möglich, die Trennschalter entsprechend dem Ausführungsbeispiel gemäss Fig. 2, d.h. ohne Erdungskontakt, auszubilden und die Erdung des Stromanschlusses 14 bei Bedarf über einen zusätzlichen Erdungsschalter zu bewirken. Entsprechend dem Ausführungsbeispiel gemäss Fig. 2 ist es denkbar, solche Sammelschienen mit schraubenlinienförmig um eine gemeinsame Achse gewundenen Phasenleitern auch in Anlagen mit zwei Sammelschienen zu verwenden.

## Patentansprüche

1. Metallgekapselte, gasisolierte Schaltanlage mit jeweils mindestens einem Leistungsschalter, einem Trennschalter, einer Erdung und einer Sammelschiene, bei der sich die Kontaktanordnung des Leistungsschalters (2) in einem Gehäuse (7) befindet, welches gegenüber einem die Sammelschiene (25) enthaltenden Sammelschienengehäuse (13) gasdicht abgeschottet und ohne Eingriffnahme in das Sammelschienengehäuse (13) zugänglich ist, dadurch gekennzeichnet, dass die Kontaktanordnung des Trennschalters im Sammelschienengehäuse (13) vorgesehen ist, dass das die Kontaktanordnung des Leistungsschalters (2) enthaltende Gehäuse (7) ein Gehäuseteil (Löschkammerwand 12) aus Isolierstoff aufweist, welches eine Öffnung des Sammelschienengehäuses (13) gasdicht verschliesst, und dass das aus Isolierstoff bestehende Gehäuseteil (12) des Leistungsschalters einen ins Innere des Sammelschienengehäuses (13) geführten Stromanschluss (14) trägt, dessen im Inneren des Gehäuses (7) befindliches Ende mit der Kontaktanordnung des Leistungsschalters (2) und dessen im Inneren des Sammelschienengehäuses (13) befindliches Ende mit der Kontaktanordnung des Trennschalters elektrisch leitend verbunden ist.

2. Schaltanlage nach Anspruch 1, dadurch gekennzeichnet, dass das im Inneren des Sammelschienengehäuses (13) befindliche Ende des Stromanschlusses (14) mit einem Kupplungsteil (16) verbunden ist, das einen erdbaren Kontakt (17) und einen ersten (18) beider Kontakte (18, 26) des Trennschalters trägt.

3. Schaltanlage nach Anspruch 2, dadurch gekennzeichnet, dass der Stromanschluss (14) und das Kupplungsteil (16) als Steckverbindung ausgebildet sind.

4. Schaltanlage nach einem der Ansprüche 2 oder 3, dadurch gekennzeichnet, dass das Kupplungsteil (16) an einem im Sammelschienengehäuse (13) befindlichen Stützisolator (21) befestigt ist, der ein rohrförmiges Teil (20) aufweist, welches zur Führung eines mit dem erdbaren Kontakt (17) zusammenwirkenden erdbaren Stabes (22) vorgesehen ist.

5. Schaltanlage nach Anspruch 4, dadurch gekennzeichnet, dass der Stützisolator (21) ein Isolierstoffteil (24) aufweist, auf welchem die Sammelschiene (25) und ein zweiter (26) beider Kontakte (18, 26) des Trennschalters gelagert sind.

6. Schaltanlage nach einem der Ansprüche 4 oder 5, dadurch gekennzeichnet, dass der Stützisolator (21) an einem das Sammelschienengehäuse (13) gasdicht abschliessenden Deckel (19) gehalten ist.

7. Schaltanlage nach Anspruch 6, dadurch gekennzeichnet, dass auf dem Deckel (19) des Sammelschienengehäuses (13) ein zusätzliches Sammelschienengehäuse (27) aufmontiert ist.

8. Schaltanlage nach Anspruch 7, dadurch gekennzeichnet, dass beide Sammelschienengehäuse (13, 27) abschliessbare Öffnungen aufweisen, durch welche der erdbare Stab (22) schiebbar ist.

9. Schaltanlage nach einem der Ansprüche 7 oder 8, dadurch gekennzeichnet, dass an dem zusätzlichen Sammelschienengehäuse (27) ein Erdungsschalter (32) vorgesehen ist, welcher über den Stab (22) mit dem Kupplungsteil (16) verbunden ist.

10. Schaltanlage nach einem der Ansprüche 1 bis 9, bei welcher die Sammelschiene (25) mindestens zwei Phasenleiter aufweist und für jeden Phasenleiter mindestens ein Leistungsschalter (2), ein Trennschalter und eine Erdung vorgesehen sind, dadurch gekennzeichnet, dass die Phasenleiter schraubenlinienförmig um eine gemeinsame Achse gewunden sind.

11. Schaltanlage nach Anspruch 10, dadurch gekennzeichnet, dass die Phasenleiter jeweils einen in axialer Richtung versetzt angeordneten Kontakt (26) jeweils eines der Trennschalter tragen.

12. Schaltanlage nach einem der Ansprüche 10 oder 11, dadurch gekennzeichnet, dass die Trennschalter als Dreistellungstrennschalter ausgebildet sind.

## Claims

1. Metal encapsulated gas insulated switching station having in each case at least one circuit breaker, one disconnector, one earthing system and a busbar, in which station the contact arrangement of the circuit breaker (2) is located in a housing (7) which is partitioned off in a gas tight manner with respect to a busbar housing (13) containing the busbar (25) and is accessible without having to enter the busbar housing (13), characterized in that the contact arrangement of the disconnector is provided in the busbar housing (13), that the housing (7) containing the contact arrangement of the circuit breaker (2) exhibits a housing part (interrupting chamber wall 12) of insulating material which closes an opening in the busbar housing (13) in a gas tight manner, and that the housing part (12) consisting of insulating material of the circuit breaker carries a current connector (14) which is carried into the interior of the busbar housing (13) and the end of which is located in the interior of the housing (7) is electrically conductively connected to the contact arrangement of the circuit breaker (2) and the end of which is located in the interior of the busbar housing (13) is electrically conductively connected to the contact arrangement of the disconnector.

2. Switching station according to Claim 1, characterized in that the end of the current connector (14) which is located in the interior of the busbar housing (13) is connected to a coupling part (16) which carries a contact (17) which can be connected to earth and a first contact (18) of the two contacts (18, 26) of the disconnector.

3. Switching station according to Claim 2, characterized in that the current connector (14) and the coupling part (16) are constructed as plug connection.

4. Switching station according to one of Claims 2 or 3, characterized in that the coupling part (16) is attached to a support insulator (21) which is located in the busbar housing (13) and which exhibits a tubular part (20) which is provided for carrying a rod (22) which can be earthed and which operates in conjunction with the contact (17) which can be earthed.

5. Switching station according to Claim 4, characterized in that the support insulator (21) exhibits a part (24) of insulating material on which the busbar (25) and a second contact (26) of the two contacts (18, 26) of the disconnector are supported.

6. Switching station according to one of Claims 4 or 5, characterized in that the support insulator (21) is held at a cover (19) which closes off the busbar housing (13) in a gas tight manner.

7. Switching station according to Claim 6, characterized in that an additional busbar housing (27) is mounted on the cover (19) of the busbar housing (13).

8. Switching station according to Claim 7, characterized in that the two busbar housings (13, 27) exhibit openings which can be closed off and through which the rod (22), which can be earthed, can be pushed.

9. Switching station according to one of Claims 7 or 8, characterized in that an earthing switch (32) which is connected to the coupling part (16) via the rod (22) is provided at the additional busbar housing (27).

10. Switching station according to one of Claims 1 to 9, in which the busbar (25) exhibits at least two phase conductors and at least one circuit breaker (2) one disconnector and one earthing system are provided for each phase conductor, characterized in that the phase conductors are wound helically around a common axis.

11. Switching station according to Claim 10, characterized in that the phase conductors carry in each case one contact (26), arranged to be offset in the axial direction, of in each case one of the disconnectors.

12. Switching station according to one of Claims 10 or 11, characterized in that disconnectors are constructed as three position disconnectors.

## Revendications

1. Appareillage de commutation à gaz isolant et à blindage métallique, comportant chaque fois au moins un interrupteur de puissance, un interrupteur sectionneur, une mise à la terre et une barre omnibus, dans lequel le dispositif de contact de l'interrupteur de puissance (2) se trouve dans un boîtier (7) qui est isolé de manière étanche aux gaz par rapport à un boîtier à barre omnibus (13) contenant la barre omnibus (25) et est accessible sans exiger d'intervention dans le boîtier à barre omnibus (13), caractérisé en ce que le dispositif de contact de l'interrupteur sectionneur est prévu dans le boîtier à barre omnibus (13), que le boîtier (7) contenant le dispositif de contact de l'interrupteur de puissance (2) comporte une partie de boîtier (paroi de chambre d'extinction d'arc 12) en matière isolante qui obture de manière étanche aux gaz une ouverture du boîtier à barre omnibus (13), et que la partie de boîtier (12) de l'interrupteur de puissance en matière islante porte une borne (14) amenée à l'intérieur du boîtier à barre omnibus (13), dont l'extrémité se trouvant à l'intérieur du boîtier (7) est connectée de manière conductrice au dispositif de contact de l'interrupteur de puissance (2) et dont l'extrémité se trouvant à l'intérieur du boîtier à barre omnibus (13) est connectée de manière conductrice au dispositif de contact de l'interrupteur sectionneur.

2. Appareillage de commutation suivant la revendication 1, caractérisé en ce que l'extrémité de la borne (14) se trouvant à l'intérieur du boîtier à barre omnibus (13) est connectée à un organe de couplage (16) qui porte un contact (17) pouvant être mis à la terre et un premier (18) des deux contacts (18, 26) de l'interrupteur sectionneur.

3. Appareillage de commutation suivant la revendication 2, caractérisé en ce que la borne (14) et l'organe de couplage (16) ont la forme d'une connexion à enficher.

4. Appareillage de commutation suivant la revendication 2 ou 3, caractérisé en ce que l'organe de couplage (16) est fixé à un isolateur de support (21) se trouvant dans le boîtier à barre omnibus (13), cet isolateur comportant une partie tubulaire (20) qui est prévue pour guider une barrette (22) de mise à la terre coopérant avec le contact de mise à la terre (17).

5. Appareillage de commutation suivant la revendication 4, caractérisé en ce que l'isolateur de support (21) comporte une pièce (24) en matière isolante sur laquelle sont montés la barre omnibus (25) et un second (26) des deux contacts (18, 26) de l'interrupteur sectionneur.

6. Appareillage de commutation suivant la revendication 4 ou 5, caractérisé en ce que l'isolateur de support (21) est maintenu sur un couvercle (19) fermant le boîtier à barre omnibus (13) d'une manière étanche aux gaz.

7. Appareillage de commutation suivant la revendication 6, caractérisé en ce qu'un boîtier à barre omnibus (27) supplémentaire est monté sur le couvercle (19) du boîtier à barre omnibus (13).

8. Appareillage de commutation suivant la revendication 7, caractérisé en ce que les deux boîtiers à barres omnibus (13, 27) présentent des ouvertures pouvant être fermées à travers lesquelles la barrette de mise à la terre peut coulisser.

9. Appareil de commutation suivant la revendication 7 ou 8, caractérisé en ce qu'un interrupteur de mise à la terre (32) est prévu dans le boîtier à barre omnibus supplémentaire (27) et est connecté par l'intermédiaire de la barrette (22) à l'organe de couplage (16).

10. Appareillage de commutation suivant l'une quelconque des revendications 1 à 9, dans lequel la barre omnibus (25) comporte au moins deux conducteurs de phases et, pour chaque conducteur de phase, au moins un interrupteur de puissance (2), un interrupteur sectionneur et une mise à la terre, caractérisé en ce que les conducteurs de phases sont enroulés en hélice autour d'un axe commun.

11. Appareillage de commutation suivant la revendication 10, caractérisé en ce que les conducteurs de phases portent chacun un contact (26) décalé dans le sens axial d'un des interrupteurs sectionneurs.

12. Appareillage de commutation suivant la revendication 10 ou 11, caractérisé en ce que les interrupteurs sectionneurs ont la forme d'interrupteurs sectionneurs à trois positions.

FIG.1

0152611

FIG.2

9

FIG.3